# EUROPEAN PATENT SPECIFICATION

(11) **EP 2 003 402 B1**
(45) Date of publication and mention of the grant of the patent: **13.06.2012**
(21) Application number: 07720588.8
(22) Date of filing: 28.03.2007
(51) Int. Cl.: F24F 5/00

(54) **A SUPERCOOLED ICE COLD-STORAGE UNIT, AN AIR CONDITIONING SYSTEM USING THE SAME AND A CONTROL METHOD THEREOF**
KALTLAGERUNGSEINHEIT MIT UNTERKÜHLTEM EIS, DIESE VERWENDENDE KLIMAANLAGE UND STEUERVERFAHREN DAFÜR
UNITÉ D'ENTREPOSAGE FRIGORIFIQUE DE GLACE SUPER REFROIDIE, SYSTÈME DE CONDITIONNEMENT D'AIR UTILISANT L'UNITÉ ET SON PROCÉDÉ DE GESTION

(30) Priority: 04.04.2006 CN 200610034853
(43) Date of publication of application: 17.12.2008
(73) Proprietor: GREE ELECTRIC APPLIANCES, INC. OF ZHUHAI, Zhuhai, Guangdong 519070 (CN)
(72) Inventor: XIAO, Honghai, Guangdong 519070 (CN); ZHANG, Hua, Guangdong 519070 (CN); ZHANG, Tao, Guangdong 519070 (CN); ZHANG, Long, Guangdong 519070 (CN); SHEN, Jun, Guangdong 519070 (CN); FAN, Huayun, Guangdong 519070 (CN); YAN, Weilin, Guangdong 519070 (CN); HUANG, Yuyou, Guangdong 519070 (CN)
(74) Representative: Carpintero Lopez, Francisco
(86) International application number: PCT/CN2007/001014
(87) International publication number: WO 2007/112671

(56) References cited:
- CN-A- 1 281 128
- JP-A- 05 346 249
- JP-A- 07 198 217
- JP-A- 10 132 337
- JP-A- 2002 071 190
- JP-A- 2003 065 584
- JP-A- 2003 202 135
- JP-A- 2005 003 290
- US-A1- 2002 162 342

## Description

### FIELD OF THE INVENTION

The present invention relates to the technical field of air conditioning, more particularly, to a supercooled ice-storage unit which has a simple structure and both functions of cold-storage and heat-storage, and to an air conditioning system using the said ice-storage unit and the control method thereof.

### BACKGROUND OF THE INVENTION

An ice-storage air conditioning systems of prior art uses the cheaper electricity when the power network is in low load, such as the electricity at night, to store the cold energy which is obtained by the cooling system into the water by means of secondary refrigerant (normally glycol water solution) so as to freeze the water into ice; while in the high load period of power network with expensive electricity, such as in day time, cold energy released from ice is supplied to the air conditioning system so as to reduce the demand of electricity in the high load period of power network, thus the air conditioning system is enabled with "Removing Peak Load and Filling Valley Load" of the power system. In areas short of electricity supply, ice-storage systems enable "Load Shifting", that is, shifting the cold load from the peak time of electricity supply to the valley time so as to improve energy utility efficiency and to solve the problem of short electricity supply during the peak time. Therefore, this technology is highly welcomed by the users and supported by favorable policies from the government electricity department, and it is under rapid development in domestic.

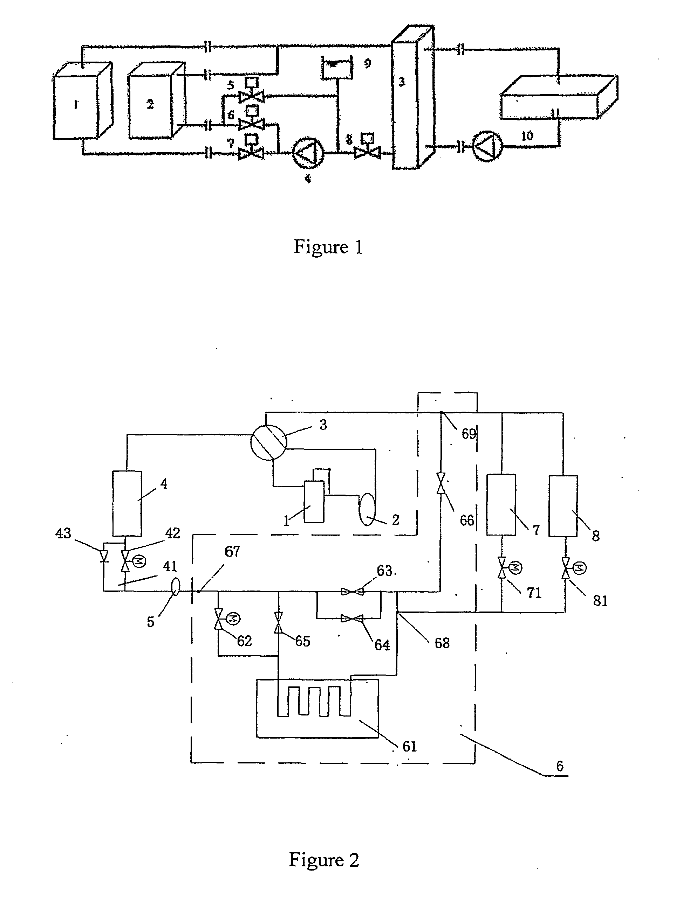

With reference to Figure 1, an ice-storage device is disclosed in the Chinese patent entitled "Ice-storage Device" with patent number 200410074074.6 which was published on 2 March 2005, wherein a cooling unit and a heat exchanger are connected to constitute a loop, an adjusting valve for the heat exchanger, a secondary refrigerant pump and an adjusting valve for the cooling unit are disposed on pipelines between the outlet of the heat exchanger and the inlet of the cooling unit; one end of an ice unit pipeline is connected with the pipelines between the secondary refrigerant pump and the adjusting valve for the cooling unit, on the ice unit pipeline are disposed the ice unit and its adjusting valve in order, and the other end of the ice unit pipeline is connected with the pipelines between the outlet of the cooling unit and the inlet of the heat exchanger; one end of a bypass pipeline is connected with the pipelines between the adjusting valve for heat exchanger and the secondary refrigerant pump, on the bypass pipeline is disposed an adjusting valve for bypass pipeline, and the other end of the bypass pipeline is connected with the pipelines between the adjusting valve for the ice unit and the ice unit.

The disadvantages of the above mentioned ice-storage device are as follows: 1. lots of modifications have to be made on the basis of the existing cooling unit, and additional secondary refrigerant and secondary refrigerant pump are required, which is complicated in structure and expensive in production cost; 2. this ice-storage device has sole function of cold-storage without that of heat-storage; 3. the supercooled degree of this ice-storage device can not be increased.

JP-A-2002-071190 discloses a unit substantially as per another supercooled ice storage unit.

### SUMMARY OF THE INVENTION

The present invention aims at solving problems in prior art by providing a supercooled ice-storage unit according to claim 1 which has a simple structure and both functions of cold-storage and heat-storage, and an air conditioning system according to claim 2 using the said ice-storage unit and the control method thereof.

The goal of the present invention is achieved by the following technical schemes:

A supercooled ice-storage unit comprises an ice-storage device 61 and a closed loop pipeline passing through said ice-storage device 61; on said closed loop pipeline are installed an electronic expansion valve 62 and three electromagnetic valves 63, 64 and 65, wherein said electronic expansion valve 62 is parallel connected with said electromagnetic valve 65, and said electromagnetic valves 63 and 64 are parallel connected. The supercooled ice-storage unit further comprises three external contacts 67, 68 and 69; wherein said external contact 67 is disposed on one side of the electronic expansion valve 62 farther away from the ice-storage device 61, the external contact 68 is disposed between the ice-storage device 61 and the electromagnetic valves 63 and 64; one end of the electromagnetic valves 63 and 64 closer to the external contact 68 is connected with one end of an electromagnetic valve 66, and the other end of said electromagnetic valve 66 is connected with an external contact 69.

An air conditioning system comprises a compressor 1, a gas-liquid separator 2, a four-way valve 3, an outdoor heat exchanger 4, a valve assembly 41 including an electronic expansion valve 42 and a check valve 43, a high pressure liquid reservoir 5 and two parallel connected indoor units 7 and 8; wherein the front ends of the indoor units 7 and 8 are respectively connected with electronic expansion valves 71 and 81, and each component is connected in order so as to form closed loops; a supercooled ice-storage unit 6 is further connected between the said high pressure liquid reservoir 5 and said parallel connected indoor units 7 and 8. Said supercooled ice-storage unit comprises an ice-storage device 61 and a closed loop pipeline passing through said ice-storage device 61; on said closed loop pipeline are installed an electronic expansion valve 62 and three electromagnetic valves 63, 64 and 65, wherein said electronic expansion valve 62 is parallel connected with said electromagnetic valve 65, and said electromagnetic valves 63 and 64 are parallel connected. The supercooled ice-storage unit further comprises three external contacts 67, 68 and 69; wherein said external contact 67 is disposed on one side of the electronic expansion valve 62 farther away from the ice-storage device 61, the external contact 68 is disposed between the ice-storage device 61 and the electromagnetic valves 63 and 64; one end of the electromagnetic valves 63 and 64 closer to the external contact 68 is connected with one end of an electromagnetic valve 66, and the other end of said electromagnetic valve 66 is connected with an external contact 69; the external contacts 67 and 68 are disposed between the high pressure liquid reservoir 5 and the parallel connected indoor units 7 and 8, with the external contact 67 disposed closer to one side of the high pressure liquid reservoir 5; the external contact 69 is connected between the four-way valve 3 and the indoor units 7 and 8.

A control method of said air conditioning system is realized by adjusting working state of the valve assembly 41, the electronic expansion valve 62, the electromagnetic valves 63, 64, 65 and 66 and the electronic expansion valves 71 and 81, so as to enable the air conditioning system to run switchably in six working modes, namely, ice storing operation, ice melting operation, normal cooling operation, normal heating pump operation, heat storing operation and heat releasing operation. The six working modes and corresponding working state of valves are illustrated in the table as below:

| State | 41 | 62 | 63 | 64 | 65 | 71 | 81 | 66 |
|---|---|---|---|---|---|---|---|---|
| ice storing operation | bypass | throttle | close | close | close | close | close | open |
| ice melting operation | bypass | random | close | close | open | throttle | throttle | close |
| normal cooling operation | bypass | close | open | random | close | throttle | throttle | close |
| normal heating pump operation | throttle | close | random | open | close | full open | full open | close |
| heat storing operation | throttle | full open | close | close | random | full open | full open | close |
| heat releasing operation | full open | full open | close | open | random | throttle | throttle | close |

The supercooled ice-storage unit of the present invention is able to run switchably in six working modes, namely, ice storing operation, ice melting operation, normal cooling operation, normal heating pump operation, heat storing operation and heat releasing operation, and makes use of the ice storage equipment to the largest extent by proper control with best energy saving effect. The ice storage equipment is used as an evaporator at summer nights to perform ice storage by freezing water at cheaper price of electricity during valley time; while during peak time in day, the ice storage equipment is used as a supercooler of the condenser to increase the supercooled degree of the refrigerant, so as to improve the equipment performance, increase the cooling capacity and reduce electricity consumption of the air conditioner; when the indoor load of the air conditioner is relatively small, ice storage equipment is not needed to operate, the air conditioner can be operated in normal operation. When winter comes, the system can be operated in heat storing operation, then the ice-storage device is used as a condenser at winner nights to perform heat storage at cheaper price of electricity during valley time; while during peak time in day, the ice storage equipment is used as an evaporator to increase evaporation temperature of the whole system, so as to improve the equipment performance, increase the heat capacity and reduce electricity consumption of the air conditioner, thereby the ice storage equipment is most properly controlled and utilized which meets energy saving requirements.

### BRIEF DESCRIPTION OF THE DRAWINGS

Figure 1 is a schematic view illustrating an ice-storage device of prior art;
Figure 2 is a schematic view illustrating the air conditioning system of the present invention;
Figure 3 is a flow diagram illustrating the running of refrigerant when the air conditioning system of the present invention performing ice storing operation;
Figure 4 is a flow diagram illustrating the running of refrigerant when the air conditioning system of the present invention performing ice melting operation;
Figure 5 is a flow diagram illustrating the running of refrigerant when the air conditioning system of the present invention performing normal cooling operation;
Figure 6 is a flow diagram illustrating the running of refrigerant when the air conditioning system of the present invention performing normal heating pump operation;
Figure 7 is a flow diagram illustrating the running of refrigerant when the air conditioning system of the present invention performing heat storing operation;
Figure 8 is a flow diagram illustrating the running of refrigerant when the air conditioning system of the present invention performing heat releasing operation.

### DETAIL DESCRIPTION OF THE PREFERRED EMBODIMENTS

As illustrated in Figure 2, a supercooled ice-storage unit 6 is shown in a dashed line box, comprising an ice-storage device 61, a closed loop pipeline and three external contacts 67, 68 and 69. Said closed loop pipeline passes through said ice-storage device 61. On said closed loop pipeline are installed an electronic expansion valve 62 and three electromagnetic valves 63, 64 and 65, wherein said electronic expansion valve 62 is parallel connected with said electromagnetic valve 65, and said electromagnetic valves 63 and 64 are parallel connected. Wherein said external contact 67 is disposed on one side of the electronic expansion valve 62 farther away from the ice-storage device 61, the external contact 68 is disposed between the ice-storage device 61 and the electromagnetic valves 63 and 64; one end of the electromagnetic valves 63 and 64 closer to the external contact 68 is connected with one end of an electromagnetic valve 66, and the other end of said electromagnetic valve 66 is connected with an external contact 69.

An air conditioning system is illustrated in Figure 2, comprising a compressor 1, a gas-liquid separator 2, a four-way valve 3, an outdoor heat exchanger 4, a valve assembly 41 including an electronic expansion valve 42 and a check valve 43, a high pressure liquid reservoir 5 and two parallel connected indoor units 7 and 8; wherein the front ends of the indoor units 7 and 8 are respectively connected with electronic expansion valves 71 and 81, and each component is connected in order so as to form closed loops. The air conditioning system further comprises an above mentioned supercooled ice-storage unit 6, wherein the external contacts 67 and 68 disposed between the high pressure liquid reservoir 5 and the parallel connected indoor units 7 and 8, with the external contact 67 disposed closer to one side of the high pressure liquid reservoir 5; the external contact 69 is connected between the four-way valve 3 and the indoor units 7 and 8.

By controlling on and off of the four electromagnetic valves 63, 64, 65 and 66 and the electronic expansion valve 62, in combination with the control of the valve assembly 41 and the electronic expansion valves 71 and 81, the above mentioned air conditioning system is able to run switchably in different working modes. In one preferred embodiment of the present invention, the air conditioning system runs switchably in six working modes, namely, ice storing operation, ice melting operation, normal cooling operation, normal heating pump operation, heat storing operation and heat releasing operation. The six working modes and corresponding working state of valves are illustrated in the table as below:

| State | 41 | 62 | 63 | 64 | 65 | 71 | 81 | 66 |
|---|---|---|---|---|---|---|---|---|
| ice storing operation | bypass | throttle | close | close | close | close | close | open |
| ice melting operation | bypass | random | close | close | open | throttle | throttle | close |
| normal cooling operation | bypass | close | open | random | close | throttle | throttle | close |
| normal heating pump operation | throttle | close | random | open | close | full open | full open | close |
| heat storing operation | throttle | full open | close | close | random | full open | full open | close |
| heat releasing operation | full open | full open | close | open | random | throttle | throttle | close |

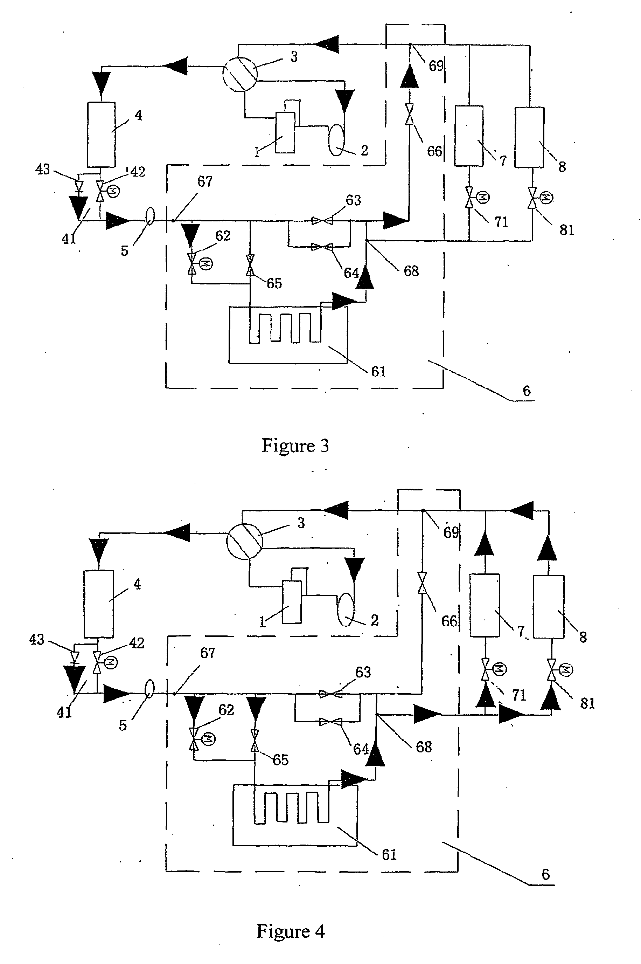

Figure 3 is a flow diagram illustrating the running of refrigerant when the air conditioning system of the present invention performing ice storing operation. When the air conditioning system is in mode of ice storing operation, the valve assembly 41 is in bypass state, wherein the bypass state refers to that the refrigerant only passes through the check valve 43 but does not pass through the electronic expansion valve 42. In bypass state, the electronic expansion valve 42 can be in random state, the electronic expansion valve 62 is in throttle state, of which the throttle degree can be adjusted automatically by the electronic expansion valve without any defined requirement. The electromagnetic valves 63, 64, 65 and the electronic expansion valves 71 and 81 are in close state, while the electromagnetic valve 66 is in open state.

Figure 4 is a flow diagram illustrating the running of refrigerant when the air conditioning system of the present invention performing ice melting operation. When the air conditioning system is in mode of ice melting operation, the valve assembly 41 is in bypass state, wherein the bypass state refers to that the refrigerant only passes through the check valve 43 but deos not pass through the electronic expansion valve 42. In bypass state, the electronic expansion valve 42 can be in random state. The electronic expansion valve 62 can be in random state, the electromagnetic valves 63, 64, 66 are in close state, the electronic expansion valves 71 and 81 are in throttle state, of which the throttle degree can be adjusted automatically by the electronic expansion valve without any defined requirement. While the electromagnetic valve 65 is in open state. In mode of ice melting operation, the ice-storage device 61 is used as a supercooler of outdoor heat exchanger 4 to increase the supercooled degree of the refrigerant so as to improve the equipment performance, increase the cooling capapcity, and reduce electricity consumption of air conditioner in electricity peak time.

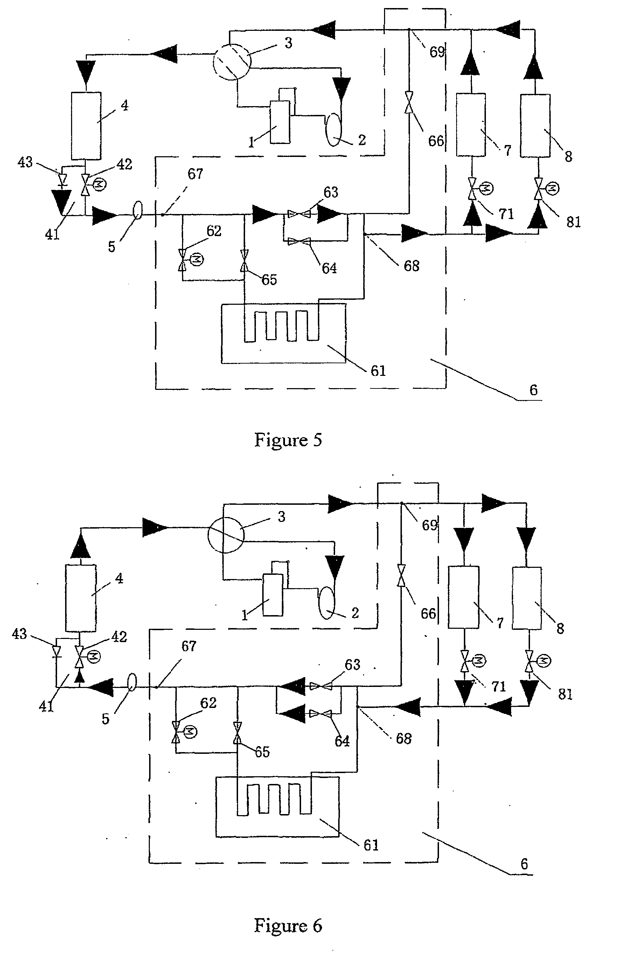

Figure 5 is a flow diagram illustrating the running of refrigerant when the air conditioning system of the present invention performing normal cooling operation. When the air conditioning system is in mode of normal cooling operation, the valve assembly 41 is in bypass state, wherein the bypass state refers to that the refrigerant only passes through the check valve 43 but does not pass through the electronic expansion valve 42. In bypass state, the electronic expansion valve 42 can be in random state. The electronic expansion valve 62 is in close state, the electromagnetic valve 63 is in open state, the electromagnetic valve 64 can be in random state, the electromagnetic valves 65 and 66 are in close state, and electronic expansion valves 71 and 81 are in throttle state, of which the throttle degree can be adjusted automatically by the electronic expansion valve without any defined requirement.

Figure 6 is a flow diagram illustrating the running of refrigerant when the air conditioning system of the present invention performing normal heating pump operation. When the air conditioning system is in mode of normal heating pump operation, the valve assembly 41 is in throttle state, wherein the throttle refers to that the refrigerant only passes through the electronic expansion valve but does not pass through the check valve, and the throttle degree can be adjusted automatically by the electronic expansion valve without any defined requirement. The electronic expansion valve 62 is in close state, the electromagnetic valve 63 can be in random state, the electromagnetic valve 64 is in open state, and electronic expansion valves 71 and 81 are in full open state.

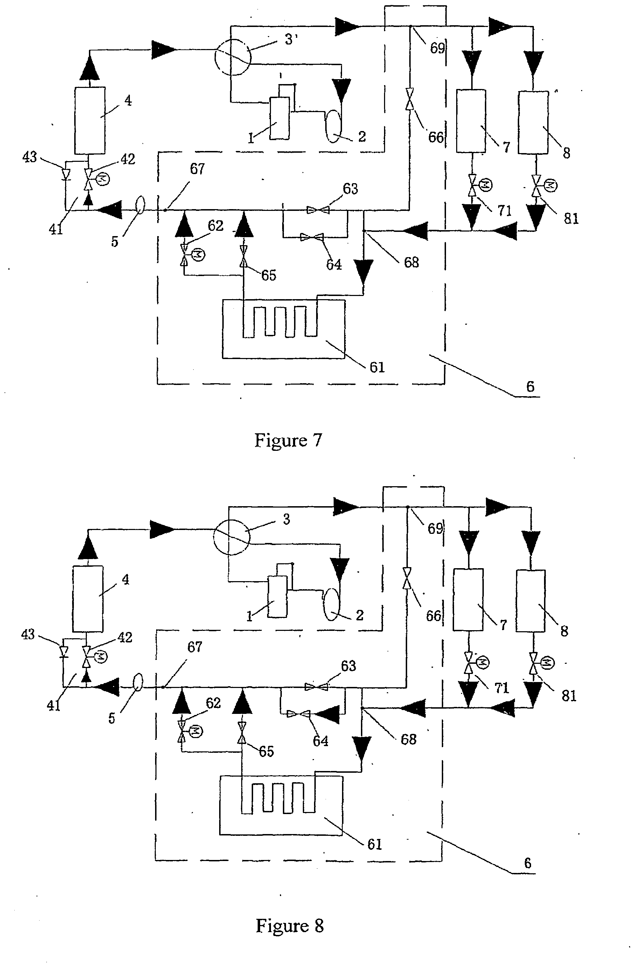

Figure 7 is a flow diagram illustrating the running of refrigerant when the air conditioning system of the present invention performing heat storing operation. When the air conditioning system is in mode of heat storing operation, the valve assembly 41 is in throttle state, wherein the throttle refers to that the refrigerant only passes through the electronic expansion valve but does not pass through the check valve, and the throttle degree can be adjusted automatically by the electronic expansion valve without any defined requirement. The electronic expansion valve 62 is in full open state, the electromagnetic valves 63, 64, 66 are in close state, the electromagnetic valve 65 can be in random state, and the electronic expansion valves 71 and 81 are in full open state.

Figure 8 is a flow diagram illustrating the running of refrigerant when the air conditioning system of the present invention performing heat releasing operation. When the air conditioning system is in mode of heat releasing operation, the valve assembly 41 is in full open state, the electronic expansion valve 62 is in full open state, the electromagnetic valves 63 and 66 are in close state, the electromagnetic valve 64 is in open state, the electromagnetic valve 65 can be in random state, and the electronic expansion valves 71 and 81 are in throttle state, throttle degree can be adjusted automatically by the electronic expansion valve without any defined requirement.

As seen from above, cold-storage and heat-storage can be utmost utilized by freely switching among the six working modes of the supercooled ice-storage unit under adjusting control on different valves in the air conditioning system

The above descriptions and illustrations should not be construed as limiting the scope of the present invention, which is defined by the appended claims.

## Claims

1. A control method of an air conditioning system, the air conditioning system comprising a compressor (1), a gas-liquid separator (2), a four-way valve (3), an outdoor heat exchanger (4), a valve assembly (41) including a first electronic expansion valve (42) and a check valve (43), a high pressure liquid reservoir (5) and two parallel connected indoor units (7, 8); wherein the front ends of the indoor units (7, 8) are respectively connected with second (71) and third (81) electronic expansion valves, and each component is connected in order so as to form closed loops; the air conditioning system further comprising a supercooled ice-storage unit (6), and said supercooled ice-storage unit (6) being connected between the said high pressure liquid reservoir (5) and said parallel connected indoor units (7, 8); said supercooled ice-storage unit (6) further comprising an ice-storage device (61) and a closed loop pipeline passing through said ice-storage device (61); on said closed loop pipeline are installed a fourth electronic expansion valve (62), a first electromagnetic valve (63), a second electromagnetic valve (64) and a third electromagnetic valve (65), wherein said fourth electronic expansion valve (62) is parallel connected with said third electromagnetic valve (65), and said first electromagnetic valve (63) and said second electromagnetic valve (64) are parallel connected; **characterized in that**, said supercooled ice-storage unit (6) further comprises a first external contact (67), a second external contact (68) and a third external contact (69); wherein said first external contact (67) is disposed on one side of the fourth electronic expansion valve (62) farther away from the ice-storage device (61); the second external contact (68) is disposed between the ice-storage device (61) and the first electromagnetic valve (63) and the second electromagnetic valve (64); one end of the first electromagnetic valve (63) and the second electromagnetic valve (64) closer to the second external contact (68) is connected with one end of a fourth electromagnetic valve (66), and the other end of said fourth electromagnetic valve (66) is connected with said third external contact (69); the first external contact (67) and the second external contact (68) are disposed between the high pressure liquid reservoir (5) and the parallel connected indoor units (7, 8), with the first external contact (67) disposed closer to one side of the high pressure liquid reservoir (5); the third external contact (69) is connected between the four-way valve (3) and the indoor units (7, 8);
wherein
the control method is realized by adjusting working state of the valve assembly (41), the fourth electronic expansion valve (62), the first electromagnetic valve (63), the second electromagnetic valve (64), the third electromagnetic valve (65) and the fourth electromagnetic valve (66) and the second (71) and third (81) electronic expansion valves, so as to enable the air conditioning system to run switchably in six working modes, namely, ice storing operation, ice melting operation, normal cooling operation, normal heating pump operation, heat storing operation and heat releasing operation;
wherein,
when the air conditioning system is in mode of heat releasing operation, the valve assembly (41) is in full open state, the fourth electronic expansion valve (62) is in full open state, the first electromagnetic valve (63) and the fourth electromagnetic valve (66) are in close state, the second electromagnetic valve (64) is in open state, the third electromagnetic valve (65) can be in random state, and the second (71) and third (81) electronic expansion valves are in throttle state;
and wherein
the ice-storage device (61) and the outdoor heat exchanger (4) are in series connection.

2. The control method according to claim 1, **characterized in that**, when the air conditioning system is in mode of ice storing operation, the valve assembly (41) is in bypass state, the fourth electronic expansion valve (62) is in throttle state, the first electromagnetic valve (63), the second electromagnetic valve (64), the third electromagnetic valve (65) and the second (71) and third (81) electronic expansion valves are in close state, while the fourth electromagnetic valve (66) is in open state.

3. The control method according to claim 1, **characterized in that**, when the air conditioning system is in mode of ice melting operation, the valve assembly (41) is in bypass state, the fourth electronic expansion valve (62) can be in random state, the first electromagnetic valve (63), the second electromagnetic valve (64), and the fourth electromagnetic valve (66) are in close state, the second (71) and third (81) electronic expansion valves are in throttle state, while the third electromagnetic valve (65) is in open state.

4. The control method according to claim 1, **characterized in that**, when the air conditioning system is in mode of normal cooling operation, the valve assembly (41) is in bypass state, the fourth electronic expansion valve (62) is in close state, the first electromagnetic valve (63) is in open state, the second electromagnetic valve (64) can be in random state, the third electromagnetic valve (65) and the fourth electromagnetic valve (66) are in close state, and the second (71) and third (81) electronic expansion valves are in throttle state.

5. The control method according to claim 1, **characterized in that**, when the air conditioning system is in mode of normal heating pump operation, the valve assembly (41) is in throttle state, the fourth electronic expansion valve (62) is in close state, the first electromagnetic valve (63) can be in random state, the second electromagnetic valve (64) is in open state, the third electromagnetic valve (65) and the fourth electromagnetic valve (66) are in close state, and the second (71) and third (81) electronic expansion valves are in full open state.

6. The control method according to claim 1, **characterized in that**, when the air conditioning system is in mode of heat storing operation, the valve assembly (41) is in throttle state, the fourth electronic expansion valve (62) is in full open state, the first electromagnetic valve (63), the second electromagnetic valve (64), and the fourth electromagnetic valve (66) are in close state, the third electromagnetic valve (65) can be in random state, and the second (71) and third (81) electronic expansion valves are in full open state.

## Patentansprüche

1. Steuerungsverfahren für eine Klimaanlage, wobei die Klimaanlage einen Kompressor (1), einen Gas-Flüssigkeits-Abscheider (2), ein Vierwegeventil (3), einen Außenwärmetauscher (4), eine Ventilanordnung (41) mit einem ersten elektronischen Expansionsventil (42) und einem Rückschlagventil (43), ein Hochdruck-Flüssigkeitsreservoir (5) und zwei parallel geschaltete Innenraumeinheiten (7, 8) umfasst; wobei die vorderen Enden der Innenraumeinheiten (7, 8) jeweils mit dem zweiten (71) und dritten (81) elektronischen Expansionsventil verbunden sind, und jede Komponente angeschlossen ist, um geschlossene Kreisläufe zu bilden; wobei die Klimaanlage darüber hinaus eine unterkühlte Eisspeicherungseinheit (6) umfasst, und die unterkühlte Eisspeicherungseinheit (6) zwischen das Hochdruck-Flüssigkeitsreservoir (5) und die parallel geschalteten Innenraumeinheiten (7, 8) geschaltet ist; wobei die unterkühlte Eisspeicherungseinheit (6) ferner eine Eisspeicherungseinrichtung (61) und eine als geschlossener Kreislauf ausgebildete Rohrleitung umfasst, die durch die Eisspeicherungseinrichtung (61) verläuft; an der als geschlossenen Kreislauf ausgebildeten Rohrleitung ein viertes elektronisches Expansionsventil (62), ein erstes Magnetventil (63), ein zweites Magnetventil (64) und ein drittes Magnetventil (65) angebaut sind, wobei das vierte elektronische Expansionsventil (62) mit dem dritten Magnetventil (65) parallel geschaltet ist und das erste Magnetventil (63) und das zweite Magnetventil (64) parallel geschaltet sind;
**dadurch gekennzeichnet, dass** die unterkühlte Eisspeicherungseinheit (6) darüber hinaus einen ersten Außenanschluss (67), einen zweiten Außenanschluss (68) und einen dritten Außenanschluss (69) umfasst; wobei der erste Außenanschluss (67) auf einer Seite des vierten elektronischen Expansionsventils (62) angeordnet ist, die weiter von der Eisspeicherungseinrichtung (61) entfernt ist; der zweite Außenanschluss (68) zwischen der Eisspeicherungseinrichtung (61) und dem ersten Magnetventil (63) und dem zweiten Magnetventil (64) angeordnet ist; ein Ende des ersten Magnetventils (63) und des zweiten Magnetventils (64), das näher bei dem zweiten Außenanschluss (68) liegt, mit einem Ende eines vierten Magnetventils (66) verbunden ist, und das andere Ende des vierten Magnetventils (66) mit dem dritten Außenanschluss (69) verbunden ist; der erste Außenanschluss (67) und der zweite Außenanschluss (68) zwischen dem Hochdruck-Flüssigkeitsreservoir (5) und den parallel geschalteten Innenraumeinheiten (7, 8) angeordnet ist, wobei der erste Außenanschluss (67) näher bei einer Seite des Hochdruck-Flüssigkeitsreservoirs (5) angeordnet ist; und der dritte Außenanschluss (69) zwischen das Vierwegeventil (3) und die Innenraumeinheiten (7, 8) geschaltet ist;
wobei
das Steuerungsverfahren realisiert wird, indem der Arbeitszustand der Ventilanordnung (41), des vierten elektronischen Expansionsventils (62), des ersten Magnetventils (63), des zweiten Magnetventils (64), des dritten Magnetventils (65) und des vierten Magnetventils (66) und des zweiten (71) und dritten (81) elektronischen Expansionsventils derart eingestellt wird, dass ermöglicht wird, dass die Klimaanlage umschaltbar in sechs Arbeitsmodi läuft, nämlich Eisspeicherungsbetrieb, Eisschmelzbetrieb, normaler Kühlbetrieb, normaler Wärmepumpenbetrieb, Wärmespeicherungsbetrieb und Wärmeabgabebetrieb;
wobei,
wenn die Klimaanlage im Modus eines Wärmeabgabebetriebs ist, die Ventilanordnung (41) im voll offenen Zustand ist, das vierte elektronische Expansionsventil (62) im voll offenen Zustand ist, das erste Magnetventil (63) und das vierte Magnetventil (66) im geschlossenen Zustand sind, das zweite Magnetventil (64) im offenen Zustand ist, das dritte Magnetventil (65) in einem beliebigen Zustand sein kann, und das zweite (71) und dritte (81) elektronische Expansionsventil im Drosselungszustand sind;
und wobei
die Eisspeicherungseinrichtung (61) und der Außenwärmetauscher (4) in Reihe geschaltet sind.

2. Steuerungsverfahren nach Anspruch 1,
**dadurch gekennzeichnet, dass**,
wenn die Klimaanlage im Modus des Eisspeicherungsbetriebs ist, die Ventilanordnung (41) im Bypasszustand ist, das vierte elektronische Expansionsventil (62) im Drosselungszustand ist, das erste Magnetventil (63), das zweite Magnetventil (64), das dritte Magnetventil (65) und das zweite (71) und dritte (81) elektronische Expansionsventil im geschlossenen Zustand sind, während das vierte Magnetventil (66) im offenen Zustand ist.

3. Steuerungsverfahren nach Anspruch 1,
**dadurch gekennzeichnet, dass**,
wenn die Klimaanlage im Modus des Eisschmelzbetriebes ist, die Ventilanordnung (41) im Bypasszustand ist, das vierte elektronische Expansionsventil (62) in einem beliebigen Zustand sein kann, das erste Magnetventil (63), das zweite Magnetventil (64) und das vierte Magnetventil (66) im geschlossenen Zustand sind, das zweite (71) und dritte (81) elektronische Expansionsventil im Drosselungszustand sind, während das dritte Magnetventil (65) im offenen Zustand ist.

4. Steuerungsverfahren nach Anspruch 1,
**dadurch gekennzeichnet, dass**,
wenn die Klimaanlage im Modus des normalen Kühlbetriebes ist, die Ventilanordnung (41) im Bypasszustand ist, das vierte elektronische Expansionsventil (62) im geschlossenen Zustand ist, das erste Magnetventil (63) im offenen Zustand ist, das zweite Magnetventil (64) in einem beliebigen Zustand sein kann, das dritte Magnetventil (65) und das vierte Magnetventil (66) im geschlossenen Zustand sind, und das zweite (71) und dritte (81) elektronische Expansionsventil im Drosselungszustand sind.

5. Steuerungsverfahren nach Anspruch 1,
**dadurch gekennzeichnet, dass**,
wenn die Klimaanlage im Modus des normalen Wärmepumpenbetriebes ist, die Ventilanordnung (41) im Drosselungszustand ist, das vierte elektronische Expansionsventil (62) im geschlossenen Zustand ist, das erste Magnetventil (63) in einem beliebigen Zustand sein kann, das zweite Magnetventil (64) im offenen Zustand ist, das dritte Magnetventil (65) und das vierte Magnetventil (66) im geschlossenen Zustand sind, und das zweite (71) und dritte (81) elektronische Expansionsventil im voll offenen Zustand sind.

6. Steuerungsverfahren nach Anspruch 1,
**dadurch gekennzeichnet, dass**,
wenn die Klimaanlage im Modus des Wärmespeicherungsbetriebes ist, die Ventilanordnung (41) im Drosselungszustand ist, das vierte elektronische Expansionsventil (62) im voll offenen Zustand ist, das erste Magnetventil (63), das zweite Magnetventil (64) und das vierte Magnetventil (66) im geschlossenen Zustand sind, das dritte Magnetventil (65) in einem beliebigen Zustand sein kann, und das zweite (71) und dritte (81) elektronische Expansionsventil im voll offenen Zustand sind.

## Revendications

1. Procédé de commande d'un système de climatisation, le système de climatisation comprenant un compresseur (1), un séparateur gaz-liquide (2), une vanne à quatre voies (3), un échangeur de chaleur d'extérieur (4), un ensemble de vanne (41) comprenant une première vanne de détente électronique (42) et un clapet de non-retour (43), un réservoir de liquide à haute pression (5) et deux unités d'intérieur connectées en parallèle (7, 8) ; dans lequel les extrémités avant des unités d'intérieur (7, 8) sont respectivement connectées à des deuxième (71) et troisième (81) vannes de détente électroniques, et chaque composant est connecté afin de former des boucles fermées ; le système de climatisation comprenant en outre une unité de stockage de glace en surfusion (6), et ladite unité de stockage de glace en surfusion (6) étant connectée entre ledit réservoir de liquide à haute pression (5) et lesdites unités d'intérieur connectées en parallèle (7, 8) ; ladite unité de stockage de glace en surfusion (6) comprenant en outre un dispositif de stockage de glace (61) et une conduite à boucle fermée passant à travers ledit dispositif de stockage de glace (61) ; sur ladite conduite en boucle fermée sont installées une quatrième vanne de détente électronique (62), une première vanne électromagnétique (63), une deuxième vanne électromagnétique (64) et une troisième vanne électromagnétique (65), dans lequel ladite quatrième vanne de détente électronique (62) est connectée en parallèle avec ladite troisième vanne électromagnétique (65), et ladite première vanne électromagnétique (63) et ladite deuxième vanne électromagnétique (64) sont connectées en parallèle ; **caractérisé en ce que** ladite unité de stockage de glace en surfusion (6) comprend en outre un premier contact externe (67), un deuxième contact externe (68) et un troisième contact externe (69) ; dans lequel ledit premier contact externe (67) est disposé sur un côté de la quatrième vanne de détente électronique (62) plus éloigné du dispositif de stockage de glace (61) ; le deuxième contact externe (68) est disposé entre le dispositif de stockage de glace (61) et la première vanne électromagnétique (63) et la deuxième vanne électromagnétique (64) ; une extrémité de la première vanne électromagnétique (63) et de la deuxième vanne électromagnétique (64) plus près du deuxième contact externe (68) est connectée avec une extrémité d'une quatrième vanne électromagnétique (66), et l'autre extrémité de ladite quatrième vanne électromagnétique (66) est connectée avec ledit troisième contact externe (69) ; le premier contact externe (67) et le deuxième contact externe (68) sont disposés entre le réservoir de liquide à haute pression (5) et les unités d'intérieur connectées en parallèle (7, 8), le premier contact externe (67) étant disposé plus près d'un côté du réservoir de liquide à haute pression (5) ; le troisième contact externe (69) est connecté entre la vanne à quatre voies (3) et les unités d'intérieur (7, 8) ;
dans lequel
le procédé de commande est réalisé en ajustant un état de travail de l'ensemble de vanne (41), la quatrième vanne de détente électronique (62), la première vanne électromagnétique (63), la deuxième vanne électromagnétique (64), la troisième vanne électromagnétique (66) et les deuxième (71) et troisième (81) vannes de détente électroniques, afin de permettre au système de climatisation d'exécuter de façon commutable six modes opératoires, à savoir, fonctionnement de stockage de glace, fonctionnement de fusion de glace, fonctionnement de refroidissement normal, fonctionnement de pompe à chaleur normal, fonctionnement de stockage de chaleur et fonctionnement de libération de chaleur ;
dans lequel
lorsque le système de climatisation est en mode de fonctionnement de libération de chaleur, l'ensemble de vanne (41) est dans état complètement ouvert, la quatrième vanne de détente électronique (62) est dans un état complètement ouvert, la première vanne électromagnétique (63) et la quatrième vanne électromagnétique (66) sont dans un état fermé, la deuxième vanne électromagnétique (64) est dans un état ouvert, la troisième vanne électromagnétique (65) peut être dans un état aléatoire, et les deuxième (71) et troisième (81) vannes de détente électroniques sont dans un état d'étranglement ;
et dans lequel
le dispositif de stockage de glace (61) et l'échangeur de chaleur d'extérieur (4) sont connectés en série.

2. Procédé de commande selon la revendication 1, **caractérisé en ce que**, lorsque le système de climatisation est en mode de fonctionnement de stockage de glace, l'ensemble de vanne (41) est dans un état de de dérivation, la quatrième vanne de détente électronique (62) est dans un état d'étranglement, la première vanne électromagnétique (63), la deuxième vanne électromagnétique (64), la troisième vanne électromagnétique (65) et les deuxième (71) et troisième (81) vannes de détente électroniques sont dans un état fermé, tandis que la quatrième vanne électromagnétique (66) est dans un état ouvert.

3. Procédé de commande selon la revendication 1, **caractérisé en ce que**, lorsque le système de climatisation est dans un mode de fonctionnement de fusion de glace, l'ensemble de vanne (41) est dans un état de de dérivation, la quatrième vanne de détente électronique (62) peut être dans un état aléatoire, la première vanne électromagnétique (63), la deuxième vanne électromagnétique (64), et la quatrième vanne électromagnétique (66) sont dans un état fermé, les deuxième (71) et troisième (81) vannes électromagnétiques électroniques sont dans un état d'étranglement, tandis que la troisième vanne électromagnétique (65) est dans un état ouvert.

4. Procédé de commande selon la revendication 1, **caractérisé en ce que**, lorsque le système de climatisation est dans un mode de fonctionnement de refroidissement normal, l'ensemble de vanne (41) est dans un état de de dérivation, la quatrième vanne de détente électronique (62) est dans un état fermé, la première vanne électromagnétique (63) est dans un état ouvert, la deuxième vanne électromagnétique (64) peut être en état aléatoire, la troisième vanne électromagnétique (65) et la quatrième vanne électromagnétique (66) sont dans un état fermé, et les deuxième (71) et troisième (81) vannes de détente électroniques sont dans un état d'étranglement.

5. Procédé de commande selon la revendication 1, **caractérisé en ce que** lorsque le système de climatisation est dans un mode de fonctionnement de pompe à chaleur normal, l'ensemble de vanne (41) est dans un état d'étranglement, la quatrième vanne de détente électronique (62) est dans un état fermé, la première vanne électromagnétique (63) peut être dans un état aléatoire, la deuxième vanne électromagnétique (64) est dans un état ouvert, la troisième vanne électromagnétique (65) et la quatrième vanne électromagnétique (66) sont dans un état fermé, et les deuxième (71) et troisième (81) vannes de détente électroniques sont dans un état complètement ouvert.

6. Dispositif de commande selon la revendication 1, **caractérisé en ce que**, lorsque le système de climatisation est en mode de fonctionnement de stockage de chaleur, l'ensemble de vanne (41) est dans un état d'étranglement, la quatrième vanne de détente électronique (62) est dans un état complètement ouvert, la première vanne électromagnétique (63), la deuxième vanne électromagnétique (64) et la quatrième vanne électromagnétique (66) sont dans un état fermé, la troisième vanne électromagnétique (65) peut être dans un état aléatoire, et les deuxième (71) et troisième (81) vannes de détente électroniques sont dans un état complètement ouvert.
